(19) Europäisches Patentamt / European Patent Office / Office européen des brevets

(11) **EP 3 023 243 A1**

(12) **EUROPEAN PATENT APPLICATION**
published in accordance with Art. 153(4) EPC

(43) Date of publication:
**25.05.2016 Bulletin 2016/21**

(21) Application number: **14825982.3**

(22) Date of filing: **18.07.2014**

(51) Int Cl.:
**B32B 9/00** *(2006.01)*     **B05D 7/00** *(2006.01)*
**B05D 7/24** *(2006.01)*

(86) International application number:
**PCT/JP2014/069245**

(87) International publication number:
**WO 2015/008867 (22.01.2015 Gazette 2015/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.07.2013   JP 2013149938**
**30.05.2014   JP 2014113210**

(71) Applicant: **Toyo Tanso Co., Ltd.**
**Osaka-shi, Osaka 555-0011 (JP)**

(72) Inventors:
• **MISAKI, Nobuya**
  **Mitoyo-shi**
  **Kagawa 769-1102 (JP)**
• **KOYAMA, Katsushi**
  **Mitoyo-shi**
  **Kagawa 769-1102 (JP)**
• **HOSOKAWA, Toshihiro**
  **Mitoyo-shi**
  **Kagawa 769-1102 (JP)**

(74) Representative: **TBK**
**Bavariaring 4-6**
**80336 München (DE)**

(54) **SHEET-LIKE STACKED BODY, PRODUCTION METHOD FOR SHEET-LIKE STACKED BODY, AND SHEET-LIKE COMPOSITE BODY**

(57)     A sheet-like stacked body 1 includes a flexible graphite sheet 10 and a conductive resin layer 20 formed on the graphite sheet 10. The conductive resin layer 20 includes carbon particles and binder.

FIG.1

EP 3 023 243 A1

**Description**

[Technical Field]

The present invention relates to a sheet-like stacked body (a sheet- shaped laminated body) in which a conductive resin layer is formed on a graphite sheet, a method of producing the a sheet-like stacked body (the sheet-shaped laminated body), and a sheet-like composite body (a sheet-shaped composite body) in which a gas impermeable resin layer is formed at an end face of the graphite sheet.

[Background]

A gas impermeable graphite sheet is used in various fields such as a separator for a fuel cell, an electrode for an air cleaner, and a packing (see PTL 1). In places where flammable gas or the like is dealt with, a graphite sheet is used for an electromagnetic wave absorber, too.

[Citation List]

[Patent Literature]

[PTL 1] Japanese Unexamined Patent Publication No. 2002-93431

[Summary of Invention]

[Technical Problem]

The gas impermeability of the graphite sheet, however, is incomplete, and various problems have actually occurred because a part of gas pass through the graphite sheet. For example, when the graphite sheet is used for an electrode, the performance of the electrode is deteriorated as gas passes through the sheet. On this account, the gas impermeability is improved by coating the graphite sheet with resin. This, however, is disadvantageous in that the function as the electrode is impaired as the surface resistivity of the graphite sheet is increased by the resin. Furthermore, it may become impossible to prevent the graphite sheet from being electrically charged.
Furthermore, the permeation of the gas may not be sufficiently prevented even if the surface of the graphite sheet is coated with resin. The performance of the electrode is deteriorated in such a case.
An object of the present invention is therefore to prevent the decrease in surface resistivity while preventing permeation of gas. Furthermore, another object of the present invention is to prevent permeation of gas in the surface direction of the graphite sheet.

[Solution to Problem]

In a sheet-like stacked body (a sheet- shaped laminated body) of the present invention, a conductive resin layer including carbon particles and binder is formed on a graphite sheet (a flexible graphite sheet base).
According to the present invention, because the conductive resin layer is formed on the graphite sheet, the gas impermeability is improved. Furthermore, because the conductive resin layer includes conductive carbon particles, the decrease in the surface resistivity is prevented. On this account, the gas permeation is prevented at the same time the decrease in the surface resistivity is prevented.
In addition to the above, preferably, the content of the carbon particles in the conductive resin layer is 50 two% or larger and 80 wet% or smaller. When the content of the carbon particles is 50wt% or larger, the surface resistivity is effectively lowered because the carbon particles are in contact with one another and are connected with one another.
Furthermore, because the content of the binder is sufficient as the content of the carbon particles is 80wt% or smaller, the binder suitably retains continuity. The gas permeation is therefore effectively prevented. Because of the above, the surface resistivity is certainly lowered while the gas permeation is sufficiently prevented.
In addition to the above, preferably, in a thickness direction of the sheet-like stacked body, gas permeability represented by Equation (1) is $1.0 \times 10^{-5} cm^2/sec$ or lower:

$$Gas\ permeability = Q \cdot L / (\Delta P \cdot A) \ ... \ (1)$$

where, Q indicates a gas flow (Pa·cm$^2$/s), L indicates the thickness of the sheet-like stacked body, $\Delta$P indicates a pressure difference (Pa) between two chambers, A indicates a gas transmission area of the sheet-like stacked body, which is an area (cm$^2$) of a path by which the two chambers are connected.

When the gas permeability is within the range above, the gas permeation is effectively prevented.

In addition to the above, preferably, the bulk density of the graphite sheet base is 0.5Mg/m$^3$ or higher and 1.5Mg /m$^3$ or lower.

Even if the gas permeation occurs relatively easily, such a graphite sheet can be widely used. On this account, the effects of the present invention are highly significantly exhibited when the conductive resin layer is formed.

In addition to the above, preferably, the binder is rubber binder. The rubber binder is highly adhesive and allows the graphite sheet to be flexible. For this reason, even if the graphite sheet is flexed in use, the resin layer follows the graphite sheet and is less likely to be peeled off.

In addition to the above, preferably, the surface resistivity of a surface of the sheet-like stacked body on which surface the conductive resin layer is provided is 300m$\Omega$/sq or lower. This reduces the surface resistivity of the surface above.

In addition to the above, the particle diameter of each of the carbon particles is preferably 2 to 50$\mu$m, and more preferably, 5 to 30$\mu$m. When the particle diameter is in this range, the carbon particles are evenly dispersed in the conductive resin layer in a smooth manner.

In addition to the above, preferably, the thickness of the conductive resin layer is 10 to 100$\mu$m. In addition to the above, the thickness of the conductive resin layer is longer than the particle diameter of each of the carbon particles. When the conductive resin layer is too thin, sufficient gas impermeability is not obtained. In the meanwhile, when the conductive resin layer is too thick, the electrical conductivity of the graphite sheet base is less likely to be transmitted to the surface of the sheet-like stacked body. When the thickness of the conductive resin layer is in the range above, the surface resistivity is sufficiently lowered at the same time the gas permeation is sufficiently prevented.

In addition to the above, preferably, the graphite sheet base is an expanded graphite sheet. Because the gas permeation of the expanded graphite sheet is inherently low, high gas barrier property is exhibited even if the conductive resin layer is thin.

A method of producing a sheet-like stacked body (a sheet- shaped laminated body) of the present invention includes:

> An application process of applying, onto a graphite sheet base, paint including carbon particles, resin and a solvent; and A drying process of evaporating the solvent from the paint.

The above-described sheet-like stacked body can be produced by such a simple method.

In addition to the above, a sheet-like composite body (a sheet-shaped composite body) of the present invention includes: an expanded graphite sheet base; and a gas impermeable resin layer which is formed on at least a part of an end face of the expanded graphite sheet base.

Because the entrance of the gas from the end face of the expanded graphite sheet base is restrained by forming the resin layer on the end face of the expanded graphite sheet base, the gas permeation in the surface direction of the sheet-like composite body is prevented. With this, when, for example, the sheet-like composite body is employed in an electrode, the decrease in the performances of the electrode is prevented.

In addition to the above, in the sheet-like composite body above, preferably, the resin layer entirely covers the end face of the expanded graphite sheet base. Because this prevents the gas from entering through the entire end face of the expanded graphite sheet base, the gas permeation in the surface direction of the sheet-like composite body is certainly prevented.

In the sheet-like composite body above, preferably, a pressure change amount in a chamber for 30 minutes is 32Pa or smaller under conditions that:

> an expanded graphite sheet base is 1.5mm in thickness and 2.0Mg/m$^3$ in bulk density;
> an end face of the sheet-like composite body exposed to the outside is an outer circumferential surface which is $\phi$76mm in diameter;
> an end face of the sheet-like composite body exposed to the inside of the chamber is an inner circumferential surface which is $\phi$32mm in diameter;
> the capacity of the chamber is 11,050cm$^3$; and
> an initial pressure in the chamber is 190Pa.

In addition to the above, preferably, the minimum thickness of the resin layer is 5$\mu$m or longer.

With these arrangements, the gas impermeability in the surface direction of the sheet-like composite body is certainly improved.

[Advantageous Effects of Invention]

In the sheet-like stacked body of the present invention, because the conductive resin layer is formed on the graphite sheet, the gas impermeability is improved and at the same time the deterioration of the surface resistivity is prevented.

Furthermore, in the sheet-like composite body of the present invention, the entrance of the gas from the end face of the sheet-like stacked body is restrained because the resin layer is formed on the end face of the expanded graphite sheet base. With this, the gas permeation in the surface direction to the sheet-like stacked body is certainly prevented.

[Brief Description of Drawings]

[FIG. 1] FIG. 1 is a cross section of a sheet-like stacked body of First Embodiment of the present invention.
[FIG. 2A] FIG. 2A is a cross section of a sheet-like stacked body of Second Embodiment of the present invention.
[FIG. 2B] FIG. 2B is a cross section taken along the IIB-IIB line in FIG. 2A.
[FIG. 3] FIG. 3 is a schematic view of an apparatus of measuring a pressure change amount.
[FIG. 4A] FIG. 4A is a plan view of a rubber packing shown in FIG. 3.
[FIG. 4B] FIG. 4B is a plan view and a cross section of an acrylic plate shown in FIG. 3.
[FIG. 4C] FIG. 4C is a plan view of another rubber packing shown in FIG. 3.
[FIG. 4D] FIG. 4D is a plan view and a cross section of a metal flange shown in FIG. 3.
[FIG. 4E] FIG. 4E is a plan view of a sheet-like composite body shown in FIG. 3.
[FIG. 5A] FIG. 5A is a cross section of a sheet-like stacked body of Third Embodiment of the present invention.
[FIG. 5B] FIG. 5B is a cross section taken along the VB-VB line in FIG. 5A.
[FIG. 6] FIG. 6 shows results of Example and Comparative Example (each of which is a relationship between an application amount (thickness) of the conductive resin layer and gas permeability).
[FIG. 7] FIG. 7 shows results of Examples and Comparative Example (each of which is a relationship between an application amount (thickness) of the conductive resin layer and surface resistivity).
[FIG. 8] FIG. 8 shows an SEM photograph of the upper surface and its surroundings of the sheet-like stacked body of Example.
[FIG. 9] FIG. 9 shows results of Example and Comparative Example (each of which is a relationship between the minimum thickness of the resin layer and a pressure change amount).
[FIG. 10] FIG. 10 shows results of Example and Comparative Example (each of which is a relationship between the minimum thickness of the resin layer and a pressure change amount).
[FIG. 11] FIG. 11 shows an SEM photograph of the end face and its surroundings of the sheet-like composite body of each Example.

[Description of Embodiments]

The following will describe embodiments of the present invention.

[First Embodiment]

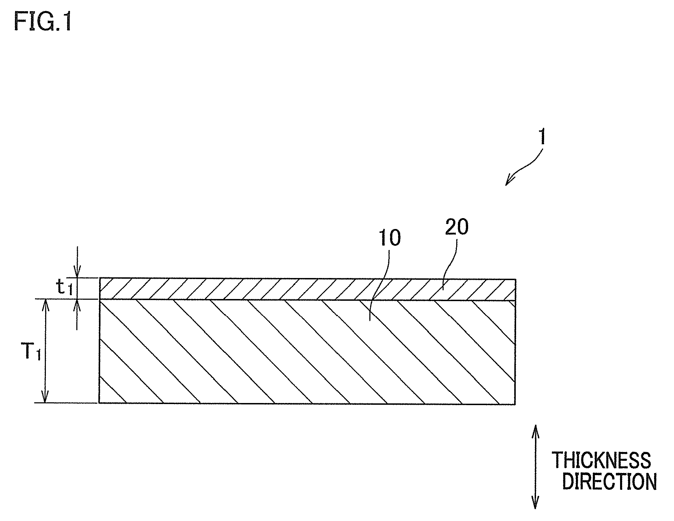

A sheet-like stacked body (a sheet-shaped laminated body) 1 of First Embodiment of the present invention will be described with reference to FIG. 1.

[Sheet-Shaped Laminated Body]

As shown in FIG. 1, the sheet-like stacked body (a sheet-shaped laminated body) 1 includes a flexible graphite sheet (graphite sheet base) 10 and a conductive resin layer 20 which is applied to one surface (upper surface) of the graphite sheet 10.

(Graphite Sheet)

Examples of the graphite sheet 10 include a sheet formed of natural graphite, a sheet formed of graphitized polymer, and graphite sheets such as an expanded graphite sheet. Among these sheets, the expanded graphite sheet is preferred because gas permeation is inherently low as no gas is produced in the manufacturing, and a high gas barrier property is exhibited even if the conductive resin layer is short in thickness.

The bulk density of the graphite sheet 10 is preferably 0.5Mg/cm$^3$ or higher, and more preferably 0.7Mg/m$^3$ or higher.

As the bulk density is arranged to be in this range, the base has a certain degree of gas barrier property, and hence the gas permeation is effectively prevented by the combination of the base and the conductive resin layer. The bulk density is preferably 1.5Mg/m$^3$ or lower, and more preferably 1.3Mg/m$^3$ or lower. When the bulk density exceeds this range, a high gas barrier property is exhibited without the conductive resin layer, and hence the effect of the embodiment is less likely to be achieved.

The thickness $T_1$ of the graphite sheet 10 is preferably 0.1mm or longer, and more preferably 0.3mm or longer. With this thickness, the gas permeation is effectively prevented. The thickness $T_1$ of the graphite sheet 10 is preferably 2.0mm or shorter, and more preferably 1.5mm or shorter. As the thickness is in this range, flexibility is stably exhibited.

(Conductive Resin Layer)

The conductive resin layer 20 is a layer including carbon particles and binder.

Examples of the carbon particles include graphite powder, carbon fibers, carbon black, and a mixture of them. Metal particles are also conductive resin, but electrical conductivity is deteriorated when the metal particles in contact with the atmosphere are oxidized. In the meanwhile, because the carbon particles are hardly oxidized in a use condition of 400 degrees centigrade or lower and is highly chemically stable, good electrical conductivity is maintained even in a condition in which contact with gas including oxygen, caustic gas, or the like. Non-limiting examples of the graphite powder are graphite powders such as natural graphite, artificial graphite, expanded graphite, and kish graphite.

The particle diameter of each of the carbon particles is preferably 2$\mu$m or longer and 50$\mu$m or shorter. When the particle diameter is too short, the carbon particles easily cohere and hence the electrical conductivity is less likely to be uniform. In the meanwhile, when the particle diameter is too long, the carbon particles are less likely to spread in the binder. Therefore good electrical conductivity is achieved when the particle diameter is in the range above.

Examples of the binder include rubber binder, vinyl binder, thermoplastic synthetic resin binder, and a combination of them.

Such binder is spread in a suitable solvent, so as to be easily applied. Among the types above, rubber binder is preferred because a high adhesive force is exhibited, and even if the flexible graphite sheet is flexed in use, the resin layer follows the graphite sheet and is less likely to be peeled off.

The conductive resin layer 20 preferably consists of 50wt% or more of carbon particles, and more preferably consists of 60wt% or more of carbon particles. With this amount of carbon particles, because the carbon particles are in contact with one another and they are likely to be electrically conductive, the electrical conduction from the surface to the graphite sheet is achieved and electricity passes through the graphite sheet, with the result that the surface resistivity is effectively lowered. The content of the carbon particles is 80wt% or less, and more preferably 75wt% or less. As the content of the carbon particles is in this range, the content of the binder is sufficient and the binder suitably retains continuity, and hence the gas permeation is effectively prevented.

The thickness $T_1$ of the conductive resin layer 20 is preferably longer than the particle diameter of the carbon particles, and is preferably 10$\mu$m or longer and 100$\mu$m or shorter. When the conductive resin layer 20 is thin, the electrical conductivity is lowered and hence the surface resistivity tends to be lowered.

In the meanwhile, when the thickness $T_1$ of the conductive resin layer 20 is excessively long, the electrical conductivity of the graphite sheet 10 is not effectively transferred to the outside. With the thickness above, the lowering of the surface resistivity is effectively prevented.

In consideration of the gas impermeability, the amount of the applied conductive resin layer 20 is preferably 0.002g/cm$^2$ or more per 1cm$^2$ of the graphite sheet, and is more preferably 0.004g/cm$^2$ or more per 1cm$^2$ of the graphite sheet. When the application amount is 0.002g/cm$^2$ or more, the deterioration in the gas impermeability is prevented. In the meanwhile, when the application amount is too large, the electrical conductivity of the graphite sheet 10 is not effectively transferred to the outside, and hence the conductivity of the sheet-like stacked body 1 tends to be lowered. On this account, the application amount is preferably 0.014g/cm$^2$ or less, more preferably 0.012g/cm$^2$ or less, and even more preferably 0.010g/cm$^2$ or less.

Examples of the conductive resin layer 20 are Varniphite UCC-2 (made by Nippon Graphite Industries, ltd.) and Varniphite #27 (made by Nippon Graphite Industries, ltd.).

The gas permeability of the above-described sheet-like stacked body 1 in the thickness direction is preferably 1. 0x10$^{-5}$cm$^2$/sec or lower, and more preferably 1.0x10$^{-6}$cm$^2$/sec or lower. The gas permeability is represented by Equation (1) below. As the gas permeability is in the range above, the gas permeation to the sheet-like stacked body 1 in the thickness direction is effectively prevented.

$$Gas\ Permeability = Q \cdot L/(\Delta P \cdot A)\ \dots\ (1)$$

In Equation (1) above, Q indicates a gas flow ($Pa \cdot cm^2/s$), L indicates thickness (cm) of the sheet-like stacked body, $\Delta P$ indicates a pressure difference (Pa) between two chambers, and A indicates a gas transmission area of the sheet-like stacked body, i.e., an area ($cm^2$) of a path connecting the two chambers with each other.
The gas permeability represented by the equation above is measured by a method described below.

(i) In a pair of chambers CA and CB which are connected with each other and are sealed, a path (10mm in diameter) connecting the chambers CA and CB with each other is disposed so as to be closed by a releasing sheet (30mm in diameter) of the present invention. To put it differently, unless passing through the releasing sheet of the present invention, no air flows between the paired sealed chambers CA and CB.
(ii) In this state, vacuum drawing is performed for the chambers CA and CB until the air pressures in the chambers CA and CB become $1.0 \times 10^{-4}$Pa. Thereafter, while the vacuum drawing is continued for one chamber CA, $N_2$ gas is supplied until the pressure in the other chamber CB becomes equal to a predetermined pressure ($1.0 \times 10^5$Pa).
(iii) When the pressure in the other chamber CB becomes equal to the predetermined pressure ($1.0 \times 10^5$Pa), the vacuum drawing for the one chamber CA is stopped. With this, on account of the pressure difference between the chambers CA and CB and the gas permeation of the releasing sheet, the $N_2$ gas gradually flows from the other chamber CB to the one chamber CA, and hence the pressure in the one chamber CA increases.
(iv) The pressure increase speed in the one chamber CA is measured for about 100 seconds after the vacuum drawing for the one chamber CA is stopped, and gas permeability K ($cm^2/s$) is calculated by the equation below.

$$K = Q \cdot L/(P \cdot A)$$

Q indicates a gas flow ($Pa \cdot cm^2/s$), L indicates the thickness (cm) of the sheet-like stacked body, P is a pressure difference (Pa) between the chambers CA and CB, and A indicates a gas transmission area of the sheet-like stacked body, i.e., an area ($cm^2$) of the path connecting the chambers CA and CB with each other.

The gas flow Q is calculated from the pressure increase speed in the one chamber CA in about 100 seconds from the stop of the vacuum drawing for the one chamber CA and the capacity of the chamber CA.
In the sheet-like stacked body 1, the surface resistivity of the surface on which the conductive resin layer 20 is provided is preferably 300m$\Omega$/sq or lower, and more preferably 200m$\Omega$/sq or lower.

(Production Method of Sheet-Shaped Laminated Body)

Paint which becomes the conductive resin layer 20 is produced by mixing carbon particles and resin (binder) into a solvent.
Subsequently, the paint is applied to the upper surface of the graphite sheet 10 (application process), the solvent is evaporated from the paint (drying process), and the sheet-like stacked body 1 is obtained. In cases of rubber binder, the solvent is xylene, toluene, or the like. Such a solvent is sufficiently dried when it is left at room temperatures, but the drying time may be shortened by performing heating in a dryer at a 150 degrees centigrade or lower.
The solvent is a suitable organic solvent such as xylene, toluene, and acetone, or the like, in which binder is soluble.
The ratio of the carbon particles is preferably arranged such that 10g to 30g of the carbon particles and the resin are contained with respect to 90 to 150g of the solvent, but is not limited to this. With this ratio, the graphite powder and the resin are evenly dispersed in the solvent.
In the sheet-like stacked body 1 obtained in the manner above, the conductive resin layer 20 is formed on the upper surface of the graphite sheet 10. On this account, the gas impermeability is improved in the thickness direction as compared to cases where only the graphite sheet 10 is provided.
Furthermore, when another layer is formed on the graphite sheet 10, the surface resistivity tends to be low as compared to cases where only the graphite sheet is provided. In this regard, in the present invention, because the carbon particles exhibiting electrical conductivity are included in the conductive resin layer 20, the surface resistivity of the sheet-like stacked body 1 (i.e., the surface resistivity of the surface on which the conductive resin layer 20 is formed) is similar to the surface resistivity of the graphite sheet 10.
On this account, in the sheet-like stacked body 1, the deterioration of the surface resistivity is prevented while the gas permeation is prevented. Such a sheet-like stacked body 1 is effectively used for products requiring gas impermeability and low surface resistivity, e.g., a separator for a fuel cell, an electrode for an air cleaner, a packing, and an electromagnetic wave absorber used in a flammable gas atmosphere. For example, when the sheet-like stacked body 1 is employed in a separator for a fuel cell, fuel gas and oxidizer gas are effectively separated while electrification is prevented.

[Second Embodiment]

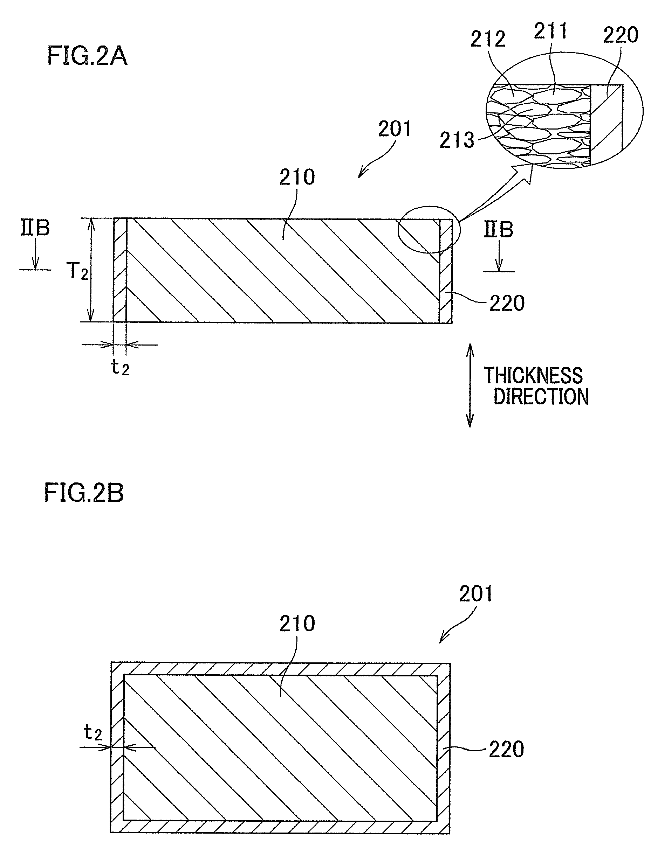

Now, Second Embodiment of the present invention will be described with reference to FIG. 2. Second Embodiment is different from First Embodiment in that a gas impermeable resin layer 220 is formed to entirely cover an end face of an expanded graphite sheet base 210. The members identical with those in

First Embodiment above will be denoted by the same reference numerals and the explanations thereof are not repeated.

As shown in FIG. 2A and FIG. 2B, a sheet-like composite body (a sheet-shaped composite body) 201 includes an expanded graphite sheet base 210 and a resin layer 220 which is formed on an entire end face of the expanded graphite sheet base 210.

This end face of expanded graphite sheet base 210 is a surface which extends in the thickness direction from an end portion of the expanded graphite sheet base 210 where the upper surface ends (i.e., a circumferential surface of the expanded graphite sheet base 210).

As shown in the enlarged view in FIG. 2A, in the expanded graphite sheet base 210, graphite scales 211, 212, and 213 which are oriented along the surface direction are stacked. Edges of the graphite scales tend to be exposed at the end face of the expanded graphite sheet base 210 in a layered manner, and the resin layer 220 is formed at this exposed part in the present embodiment.

The thickness (minimum thickness) $T_2$ of the expanded graphite sheet base 210 is preferably 0.1mm or longer, and more preferably 0.3mm or longer. With this thickness, the shape as a sheet is sufficiently retained, and performances sufficient for a purpose are exhibited. The thickness $T_2$ of the graphite sheet 10 is preferably 5mm or shorter, and more preferably 3mm or shorter. When the thickness falls in this range, the molding into the expanded graphite sheet is easily done, and the flexibility is stably exhibited.

The gas impermeable resin layer 220 exhibits gas impermeability on account of the inclusion of resin formed of rubber, acryl, polyolefin, or the like. Examples of the resin layer 220 include Varniphite (UCC-2) (made by Nippon Graphite Industries, ltd.), Varniphite #27 (made by Nippon Graphite Industries, ltd.), and Aqueous Glossy EXE Ivory (made by Nippon Paint Home Products Co., Ltd.), or the like, with which gas impermeability is imparted after layer formation. The gas impermeability here is gas impermeability better than the gas impermeability of the expanded graphite sheet base 210, which is, for example, $1.0 \times 10^{-5} cm^2/sec$ or lower, and preferably $1.0 \times 10^{-6} cm^2/sec$ or lower. The gas permeability here is measured by the measuring method described in First Embodiment.

The minimum thickness $t_2$ of the resin layer 220 is preferably $5\mu m$ or longer, more preferably $10\mu m$ or longer, and even more preferably $20\mu m$ or longer. As the minimum thickness $t_2$ is configured to be $5\mu m$ or longer, the entrance of the gas into the inside through the end face of the expanded graphite sheet base 210 is prevented. Furthermore, the application is easily done and the resin layer is certainly formed. In the meanwhile, when the application amount is excessively large, the entire shape of the sheet is varied and the design performance may not be exhibited. Furthermore, when a difference of linear expansion coefficient from the expanded graphite sheet base 210 is large, exfoliation and breakage due to stress distortion may occur. For these reasons, the minimum thickness $t_2$ of the resin layer 220 is preferably $500\mu m$ or shorter, and more preferably $200\mu m$ or shorter.

In view of the gas impermeability, the resin layer 220 is preferably formed by applying $0.001g/cm^2$ or more of the paint above or the like to $1cm^2$ of the graphite sheet, more preferably $0.005g/cm^2$ or more of the paint above or the like to $1cm^2$ of the graphite sheet. As the application amount is arranged to be $0.001g/cm^2$ or more, the entrance of the gas into the inside through the end face of the expanded graphite sheet base 210 is prevented. In the meanwhile, when the application amount is excessively large, problems such as excessive thickness of the resin layer may occur. For these reasons, the application amount is preferably $0.1g/cm^2$ or smaller, more preferably $0.05g/cm^2$ or smaller, and even more preferably $0.03g/cm^2$ or smaller.

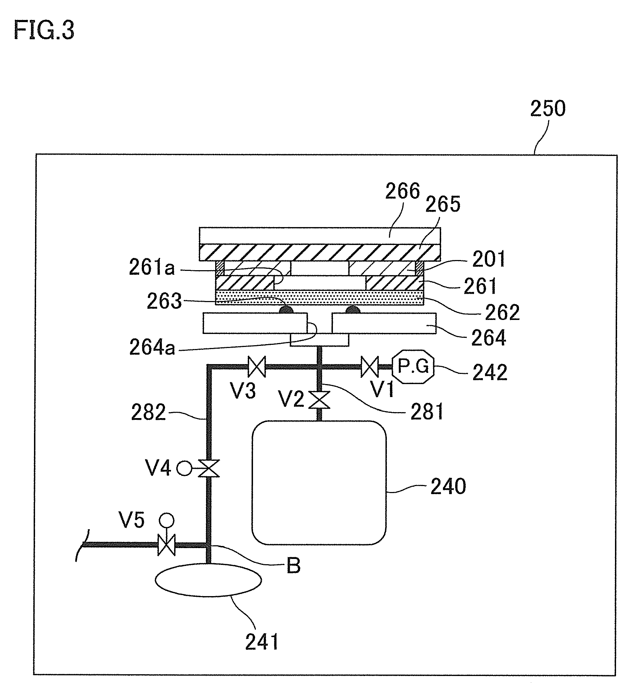

In the sheet-like composite body 201 arranged as above, a pressure change amount in 30 minutes in a chamber shown in FIG. 3 under the conditions below is preferably 32Pa or lower, and more preferably 23Pa or lower. This pressure change amount is somehow in inverse proportion to the gas impermeability of the sheet-like composite body 201 in the surface direction.

As the pressure change amount decreases, the gas impermeability increases in the surface direction. As the pressure change amount is arranged to be in the range above, the entrance of the gas into the inside through the end face of the expanded graphite sheet base 210 is effectively prevented.

In the apparatus shown in FIG. 3, the sheet-like composite body 201, a measurement tank 240, a vacuum pump 241, and a manometer 242 are provided in a chamber 250.

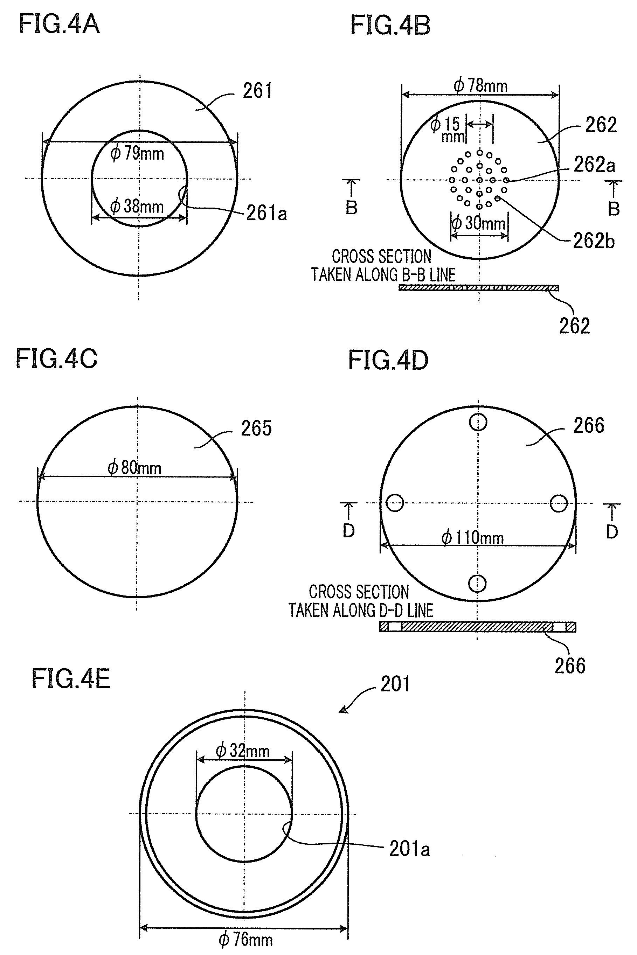

The sheet-like composite body 201 is provided on an acrylic plate 262 via a rubber packing 261. The acrylic plate 262 is mounted on an installation table 264 via an O-ring 263. The O-ring 263 seals the acrylic plate 262 and the installation table 264. At the center of the rubber packing 261, a through hole 261a is formed (see FIG. 4A). As shown in FIG. 4B, in the acrylic plate 262, small through holes 262a and 262b are formed at around the center. Furthermore, as shown in FIG. 3, at the center of the installation table 264, a through hole 264a is formed.

On the sheet-like composite body 201, a metal flange 266 is provided via a rubber packing 265. The metal flange 266 is pressed onto the sheet-like composite body 201 and is fixed thereto by screwing. The rubber packing 265 and the metal flange 266 are, as shown in FIG. 4C and FIG. 4D, disc-shaped.

At the outer circumference of the metal flange 266, four screw holes are formed at regular intervals. Furthermore, as shown in FIG. 4E, at around the center of the sheet-like composite body 201, a through hole 201a which is $\phi$32mm in diameter is formed.

A space inside the installation table 264 communicates with a first pipe 281. At the other end portion of the first pipe 281, the measurement tank 240 is provided. The first pipe 281 is provided with a valve V2.

A second pipe 282 which intersects with and communicates with the first pipe 281 is arranged such that the manometer 242 is provided at one end portion whereas the other end portion branches into two. The vacuum pump 241 is provided at the leading end of one branch, whereas a solenoid valve V5 is provided at the other branch. Furthermore, on the second pipe 282, the valve V1, a valve V3, and a solenoid valve V4 are provided in this order between the manometer 242 and a branching point B.

As shown in FIG. 3, because the sheet-like composite body 201 is sandwiched between the rubber packing 261 and the rubber packing 265 in up-down directions, gas enters the inside only through the end face (outer circumferential surface) of the sheet-like composite body 201. The gas flows through the sheet-like composite body 201 and is discharged to the inside from the inner circumferential surface of the sheet-like composite body 201. With this, the pressure in the space inside the rubber packing 261, the acrylic plate 262, the installation table 264, and the sheet-like composite body 201 is varied. When the pressure change amount is large, the amount of the gas entering from the end face of the sheet-like composite body 201 is large (i.e., the gas impermeability in the surface direction of the sheet-like composite body 201 is low). When the pressure change amount is small, the amount of the gas entering through the end face of the sheet-like composite body 201 is small (i.e., the gas impermeability in the surface direction of the sheet-like composite body 201 is good). The pressure in the space inside the rubber packing 261, the acrylic plate 262, and the installation table 264 is measured by the measurement tank 240. The method of measuring the pressure will be described below.

The initial pressure of the chamber is set at 190Pa. The capacity of the chamber and the dimensions of the sheet-like composite body 201 are shown below.

The capacity of the chamber is 11,050cm$^3$.

The expanded graphite sheet base is 1.5mm in thickness and 2.0Mg/m$^3$ in bulk density.

The end face of the sheet-like composite body 201 exposing to the outside (the outer circumferential surface of the sheet-like composite body 201) is an outer circumferential surface $\phi$ 76mm in diameter.

The end face of the sheet-like composite body 201 exposing to the inside of the chamber (the inner circumferential surface of the sheet-like composite body 201) is an inner circumferential surface $\phi$32mm in diameter.

1) A power supply system for the measurement tank 240 and the vacuum pump 241 is turned on.
2) The open state of the valve V1 and the closed state of the valves V2 and V3 are confirmed.
3) The O-ring 263 is cleaned up and the acrylic plate 262 is placed on the O-ring 263.
4) The rubber packing 261 is placed on the acrylic plate 262, and the sheet-like composite body 201 is set further thereon.
5) The rubber packing 265 is placed on the sheet-like composite body 201.
6) The metal flange 266 is screwed onto the acrylic plate 262 by using a bolt.
7) The solenoid valve V4 is opened to activate the vacuum pump.
8) The valves V1, V2, and V3 are opened.
9) The vacuum drawing is performed in consideration of an ultimate pressure (190Pa).
10) The valve V3 is closed.
11) A pressure P1 is measured by the manometer.
12) The solenoid valve V5 is opened.
13) The solenoid valve V4 is closed.
14) The vacuum pump 241 is turned off after about one minute, and the solenoid valve V5 is closed.
15) The valve V3 is closed and a pressure P2 of a manometer 242 is measured after 30 minutes.
16) The valve V2 is closed and the sheet-like composite body 201 is detached.

On account of the above, the pressure change amount is calculated by the Equation (2) below.

$$\text{The pressure change amount} = P2-P1 \ldots (2)$$

Furthermore, the gas permeability of the gas entering through the end face of the sheet-like composite body 201 is calculated by Equation (3) below, by using the pressure change amount calculated by Equation (2).

$$\text{The gas permeability } (cm^2/sec) = (\text{permeation amount of gas})$$

$$x \text{ (thickness) / (transmission area) x (time) x (pressure)}$$

$$= (V \cdot \Delta p) xt \ / \ A \cdot T \ \cdot \ (P_0-P_2) \ \ldots (3)$$

In this equation, the meanings of the respective signs are as below.

$$\Delta p = P_2-P_1$$

$P_0$: atmosphere (before measurement) (reference value: 101,325 pa)
$P_1$: ultimate pressure
$P_2$: pressure after measurement
V: measurement tank capacity $\phi$190mm in diameter x 390mm in height = 11,050cm$^3$
A: transmission area $\phi$2cm in diameter = 3.14cm$^2$
T: measurement time (sec)

The gas permeability is preferably $1.0 \times 10^{-5}$cm$^2$/sec or lower, and more preferably $1.0 \times 10^{-6}$cm$^2$/sec or lower. As the gas permeability falls within this range, the entrance of the gas into the inside through the end face of the expanded graphite sheet base 210 is effectively prevented.

(Production Method of Sheet-Shaped Composite Body)

Paint which becomes the resin layer 220 is produced by mixing resin (binder) into a solvent. Subsequently, the paint is applied to the end face of the expanded graphite sheet base 210 (application process), the solvent is evaporated from the paint (drying process), and the sheet-like composite body 201 is obtained. In cases of rubber binder, the solvent is xylene, toluene, or the like. Such a solvent is sufficiently dried when it is left at room temperatures, but the drying time may be shortened by performing heating in a dryer at a 150 degrees centigrade or lower.

In the sheet-like composite body 201 obtained in the manner above, because the resin layer 220 is formed on the end face of the expanded graphite sheet base 210, gas permeation from the end face of the expanded graphite sheet base 210 is prevented. On this account, the gas impermeability is improved in the surface direction of the expanded graphite sheet base 210 (i.e., in the direction orthogonal to the thickness direction). When the resin layer 220 is not formed, the gas impermeability is low in the surface direction of the expanded graphite sheet base 210 because the gas enters from the spaces between graphite scales constituting the expanded graphite sheet base 210. In the present embodiment, the gas impermeability is improved in the surface direction by the resin layer 220.

[Third Embodiment]

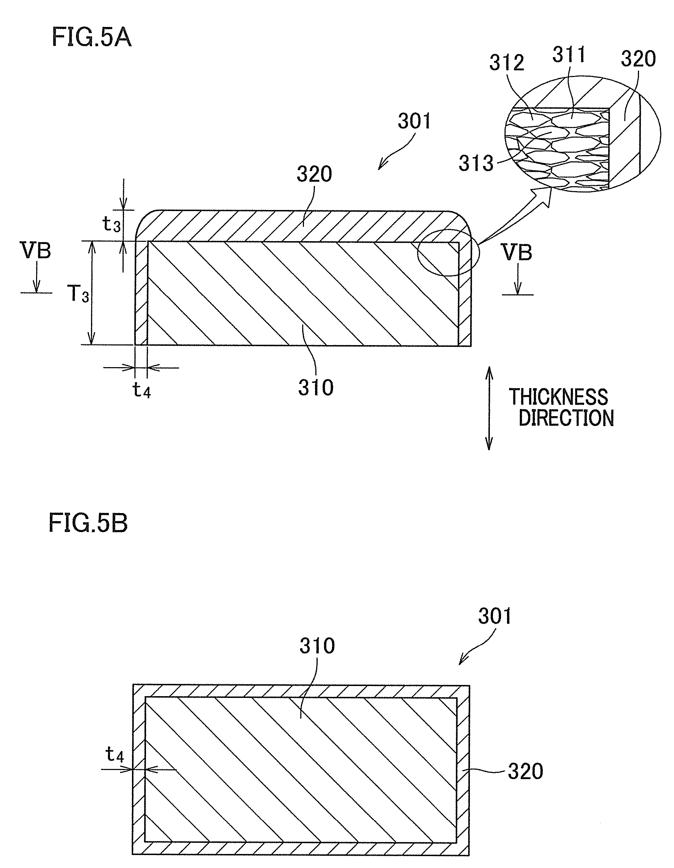

Now, Third Embodiment of the present invention will be described with reference to FIG. 5. Third Embodiment is different from First Embodiment in that a conductive resin layer 320 is formed on the upper surface and the entire end face (entire circumferential surface) of an expanded graphite sheet base 310. The members identical with those in First Embodiment above will be denoted by the same reference numerals and the explanations thereof are not repeated.

As shown in the enlarged view in FIG. 5A, in the expanded graphite sheet base 310, graphite scales 311, 312, and 313 which are oriented along the surface direction are stacked. Edges of the graphite scales 312 and 313 tend to be exposed at the end face (circumferential surface) of the expanded graphite sheet base 310 in a layered manner, and the conductive resin layer 320 is formed at this exposed part in the present embodiment.

The thickness (minimum thickness) $T_3$ of the expanded graphite sheet base 310 is preferably 0.1mm or longer, and more preferably 0.3mm or longer. With this thickness, the shape as a sheet is sufficiently retained in the same manner as the expanded graphite sheet base 210 of Second Embodiment, and performances sufficient for a purpose are exhibited. The thickness $T_3$ of the expanded graphite sheet base 310 is preferably 5mm or shorter, and more preferably 3mm or shorter.

When the thickness falls in this range, the molding into the expanded graphite sheet is easily done, and the flexibility is stably exhibited.

The conductive resin layer 320 is a layer including carbon particles and resin (binder). As the conductive resin layer 320, a layer similar to the conductive resin layer 20 of First Embodiment may be used. As the conductive resin layer 320, a layer in which conductive particles are included in binder, e.g., Varniphite, UCC and Varniphite #27 (made by Nippon Graphite Industries, ltd.) or the like may be used.

The thickness $t_3$ of the upper surface side of the expanded graphite sheet base 310 shown in FIG. 5A is, in a manner similar to the thickness $T_1$ of the conductive resin layer 20 of First Embodiment, preferably longer than the particle diameter of the carbon particles, and more preferably 10$\mu$m or longer and 100$\mu$m or shorter. The minimum thickness $t_4$ of the conductive resin layer 320 on the end face side of the expanded graphite sheet base 310 shown in FIG. 5B is, for a similar reason as the minimum thickness $t_2$ of the resin layer 220 of Second Embodiment, preferably 5$\mu$m or longer, more preferably 10$\mu$m or longer, and even more preferably 20$\mu$m or longer. Furthermore, the minimum thickness $t_4$ of the resin layer 320 is preferably 500$\mu$m or shorter, and more preferably 200$\mu$m or shorter. In FIG. 5A and FIG. 5B, the thickness of the conductive resin layer 320 is different between the upper surface side ($t_3$) and the end face side ($t_4$) of the expanded graphite sheet base 310.

These thicknesses $t_3$ and $t_4$, however, may be identical.

The application amount of the conductive resin layer 320 on the upper surface side of the expanded graphite sheet base 310 is, in a manner similar to the conductive resin layer 20 of First Embodiment, preferably 0.002g/cm$^2$ or more with respect to 1cm$^2$ of the expanded graphite sheet base, and more preferably 0.004g/cm$^2$ or more, in consideration of the gas impermeability.

The application amount of the conductive resin layer 320 on the end face side of the expanded graphite sheet base 310 is arranged such that, for a reason similar to Second Embodiment, 0.001g/cm$^2$ or more of the above-described paint or the like is applied to 1cm$^2$ of the expanded graphite sheet base, or preferably 0.005g/cm$^2$ or more of the above-described paint or the like is applied to 1cm$^2$ of the expanded graphite sheet base, in consideration of the gas impermeability. The application amount is preferably 0.1g/cm$^2$ or smaller, more preferably 0.05g/cm$^2$ or smaller, and even more preferably 0.03g/cm$^2$ or smaller.

The gas permeability in the thickness direction of the sheet-like stacked body (a sheet-shaped laminated body) 301 arranged as above is, in a manner similar to the conductive resin layer 20 of First Embodiment, preferably 1. 0x10$^{-5}$cm$^2$/sec or less, and more preferably 1. 0x10$^{-6}$cm$^2$/sec or less. The pressure change amount of the sheet-like stacked body 301 (i.e. , the pressure change amount in the conditions in Second Embodiment, measured by the apparatus shown in FIGs. 3 to 4) is preferably 32Pa or lower. As the pressure change amount is arranged to be in the range above, the entrance of the gas into the inside through the end face of the expanded graphite sheet base 310 is effectively prevented.

The sheet-like stacked body 301 may be produced by a method similar to the method of producing the sheet-like stacked body 1 of First Embodiment. In the sheet-like stacked body 301 obtained by this method, the gas permeation in the thickness direction is effectively prevented and at the same time the decrease in the surface resistivity is prevented as in First Embodiment. Furthermore, because the conductive resin layer 320 is formed also on the end face of the expanded graphite sheet base 310, the gas impermeability is improved in the surface direction.

[Examples]

Now, Example and Comparative Example of the present invention will be described.

The surface resistivity and the gas permeability in the thickness direction of the sheet-like stacked body were measured with different application amounts of the conductive resin layer in First Embodiment.

(Experiment Conditions)

Paint ("Varniphite (UCC-2)" made by Nippon Graphite Industries, ltd.) was sufficiently stirred so that binder and graphite particles were dispersed in a solvent and was then evenly applied onto a graphite sheet ("PF-50" made by Toyo Tanso Co., Ltd. with the bulk density of 1.0g/cm$^3$), and the graphite sheet with the paint was sufficiently dried at 100 degrees centigrade in a dryer, so that the solvent was completely evaporated. The conductive resin layer formed on the graphite sheet was constituted by 58wt% of natural graphite, 31wt% of rubber binder, and 11wt% of carbon black. The total content of the carbon particles in the conductive resin layer was 69wt%, and the specific gravity of the conductive resin layer was about 1.7g/cm$^3$.

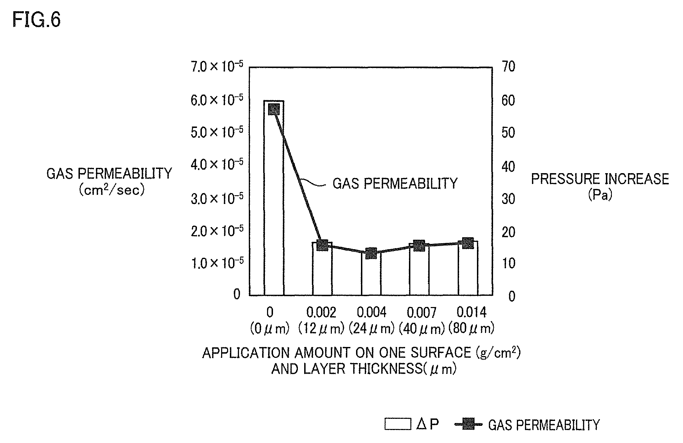

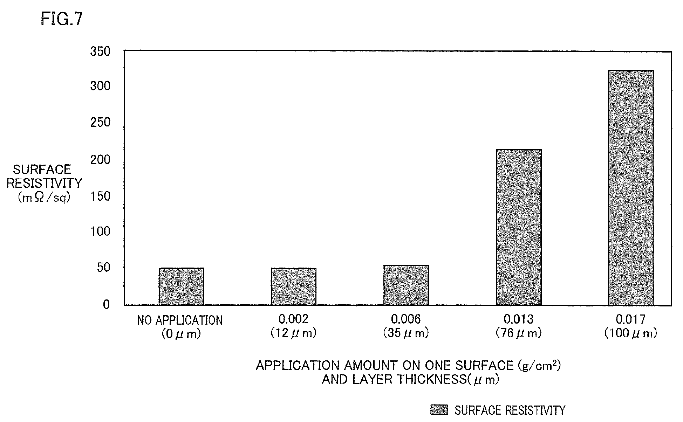

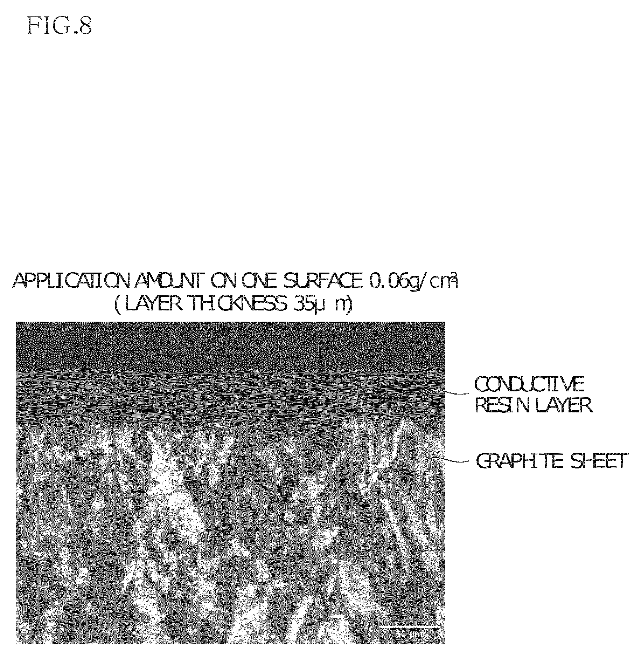

The relationship between the application amount (layer thickness) and the gas permeability of each obtained sheet-like stacked body was measured (see FIG. 6). Furthermore, the relationship between the application amount (layer thickness) and the surface resistivity was measured (see FIG. 7). FIG. 8 shows an SEM photograph around the upper surface of the sheet-like stacked body (the application amount to one surface was $0.06 g/cm^2$ (the layer thickness was $35 \mu m$)).

(Measurement Method)

<Gas Permeability>

Measurement was done by a measurement method similar to the method described in First Embodiment (gas permeability = $Q \cdot L/(\Delta P \cdot A)$).

<Surface Resistivity>

The surface resistivity of the surface of the sheet-like stacked body on which surface the conductive resin layer was formed was measured. The surface resistivity was measured by using a four-probe resistivity measuring instrument (K-705RS made by Kyowa Riken Co., Ltd.). The measurement conditions were as below.

Radius of leading end of needle: $40 \mu m$
Needle pressure: 200g
Needle pitch: 1mm

(Result of Measurement)

<Gas Permeability>

As shown in FIG. 6, when the application amount was $0.002 g/cm^2$ or larger (i.e., the layer thickness was $12 \mu m$ or longer), the gas permeability was significantly decreased to be about 1. $5 \times 10^{-5} cm^2/sec$ or lower.

<Surface Resistivity>

As shown in FIG. 7, when the application amount was $0.013 g/cm^2$ or smaller, the surface resistivity was low, i.e., $250 m\Omega/sq$ or lower. In the meanwhile, when the application amount exceeded $0.013\ g/cm^2$ (i.e., the layer thickness exceeded $76 \mu m$), the surface resistivity became significantly high and exceeded $300 m\Omega/sq$.
Subsequently, the pressure change amount (Pa) in the surface direction of the sheet-like composite body when the minimum film thickness of the resin layer was changed in Second Embodiment was measured.

(Experiment Conditions)

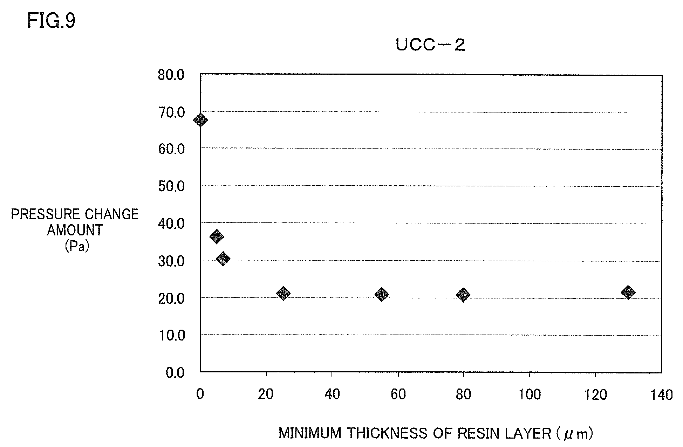

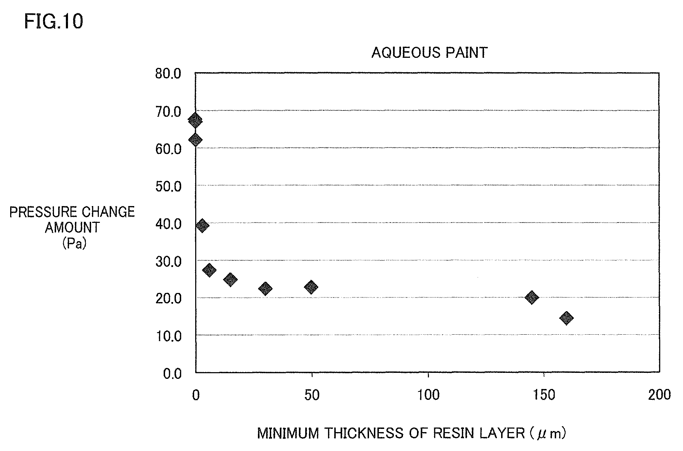

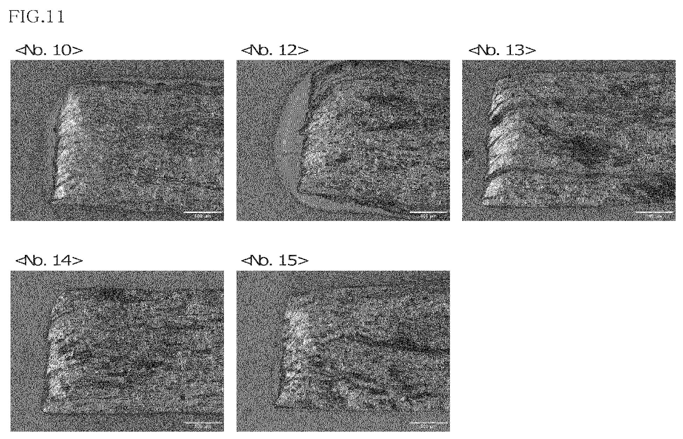

Paint ("Varniphite (UCC-2)" made by Nippon Graphite Industries, ltd.) was sufficiently stirred so that binder and graphite particles were dispersed in a solvent and was then evenly applied onto the entire circumference of an end face of a graphite sheet ("PF-150R2" made by Toyo Tanso Co., Ltd. with the bulk density of $2.0 g/cm^3$ and the thickness of 1.5mm), and the graphite sheet with the paint was sufficiently dried at 100 degrees centigrade in a dryer, so that the solvent was completely evaporated.
Further more, aqueous paint ("Aqueous Glossy EXE Ivory" made by Nippon Paint Home Products Co., Ltd.) was sufficiently stirred so that a resin component is dispersed in an aqueous solvent and is evenly applied to the entire circumference of the edge of a graphite sheet ("PF-150R2" made by Toyo Tanso Co., Ltd. with the bulk density of $2.0 g/cm^3$ and the thickness of 1.5mm). This graphite sheet is sufficiently dried at 100 degrees centigrade in the dryer, and the solvent was completely evaporated.
Then the pressure change amount in 30 minutes was calculated by the method described in Second Embodiment. The results are shown in Table 1, Table 2, FIG. 9, and FIG. 10. FIG. 9 and FIG. 10 are graphs of the results of Table 1 and Table 2, respectively. FIG. 11 show SEM photographs of the end face and the circumferential surface of the sheet-like composite body.

<Table 1>

| No. | TYPE OF PAINT | PRESSURE CHANGE AMOUNT (Pa) | MINIMUM THICKNESS ($\mu$m) |
|---|---|---|---|
| 1 | NO APPLICATION | 67.6 | 0 |
| 2 | UCC-2 | 21.1 | 25 |
| 3 | UCC-2 | 20.8 | 55 |
| 4 | UCC-2 | 20.9 | 80 |
| 5 | UCC-2 | 21.7 | 130 |
| 6 | UCC-2 | 36.2 | 5 |
| 7 | UCC-2 | 30.5 | 7 |

<Table 2>

| No. | TYPE OF PAINT | PRESSURE CHANGE AMOUNT (Pa) | MINIMUM FILM THICKNESS ($\mu$m) |
|---|---|---|---|
| 8 | NO APPLICATION | 67.6 | 0 |
| 9 | AQUEOUS PAINT | 22.4 | 30 |
| 10 | AQUEOUS PAINT | 22.8 | 50 |
| 11 | AQUEOUS PAINT | 14.5 | 160 |
| 12 | AQUEOUS PAINT | 20.0 | 145 |
| 13 | AQUEOUS PAINT | 39.1 | 3 |
| 14 | AQUEOUS PAINT | 27.3 | 6 |
| 15 | AQUEOUS PAINT | 24.7 | 15 |
| 16 | NO APPLICATION | 62.0 | 0 |

(Experiment Results)

As shown in FIG. 9, when the paint was "Varniphite (UCC-2)", the pressure change amount was restrained to be 32Pa or lower as the minimum thickness of the resin layer was arranged to be 7$\mu$m or longer.

In case of the aqueous paint, as shown in FIG. 10, the pressure change amount was restrained to be 32Pa or smaller as the minimum thickness of the resin layer was arranged to be 6$\mu$m or longer.

As indicated in FIG. 9, and FIG. 10, the two types of the paints show similar tendencies, because in both of these types the gas impermeability was exhibited when the resin layer was formed. Furthermore, because of these tendencies, it is assumed that the gas impermeability is certainly exhibited and the gas impermeability rate in the surface direction of the sheet-like composite body is good, when the minimum thickness of the resin layer is arranged to be 5$\mu$m or longer.

While the embodiments of the present invention have been described based on the figures, the scope of the invention is not limited to the above-described embodiments. The scope of the present invention is defined by the appended claims rather than the foregoing description of the embodiments, and various changes and modifications can be made herein without departing from the scope of the invention.

For example, while in First Embodiment the conductive resin layer 20 is formed on the upper surface of the graphite sheet 10, the conductive resin layer 20 may be formed on the upper surface and the bottom surface of the graphite sheet 10, or on the entire surfaces including the end face of the graphite sheet 10.

While in Second Embodiment the resin layer 220 is formed on the entire end face of the expanded graphite sheet base 210, the resin layer 220 may be formed at a part of the end face, e.g., only a part where prevention of gas permeation is required.

In addition to the above, while in Second Embodiment no layer is formed on the upper surface and the bottom surface of the expanded graphite sheet base 210, a layer may be formed on the upper surface of the expanded graphite sheet base 210 or layers may be formed on the upper surface and the bottom surface of the expanded graphite sheet base 210. Furthermore, the conductive resin layer 20 of First Embodiment may be formed on the upper surface of the expanded graphite sheet base 210, or on the upper surface and the bottom surface of the expanded graphite sheet base 210. With this arrangement, the conductive resin layer 20 prevents the gas permeation in the thickness direction and the decrease in the surface resistivity, and moreover the resin layer 220 prevents the gas permeation in the surface direction.

[Reference Signs List]

| 1, 301 | SHEET-SHAPED LAMINATED BODY |
| 10 | GRAPHITE SHEET (GRAPHITE SHEET BASE) |
| 20, 320 | CONDUCTIVE RESIN LAYER |
| 201 | SHEET-SHAPED COMPOSITE BODY |
| 210, 310 | EXPANDED GRAPHITE SHEET BASE |
| 220 | RESIN LAYER |

**Claims**

1. A sheet-like stacked body in which a conductive resin layer including carbon particles and binder is formed on a flexible graphite sheet base.

2. The sheet-like stacked body according to claim 1, wherein, the content of the carbon particles in the conductive resin layer is 50 wt% or larger and 80 wt% or smaller.

3. The sheet-like stacked body according to claim 1, wherein, in a thickness direction of the sheet-like stacked body, gas permeability represented by Equation (1) is $1.0 \times 10^{-5} cm^2$/sec or lower:

$$gas\ permeability = Q \cdot L/(\Delta P \cdot A) \ ... \ (1)$$

where, Q indicates a gas flow (Pa·cm$^2$/s), L indicates the thickness of the sheet-like stacked body, $\Delta P$ indicates a pressure difference (Pa) between two chambers, A indicates a gas transmission area of the sheet-like stacked body, which is an area (cm$^2$) of a path by which the two chambers are connected.

4. The sheet-like stacked body according to claim 1, wherein, the bulk density of the graphite sheet base is 0.5Mg/m$^3$ or higher and 1.5Mg/m$^3$ or lower.

5. The sheet-like stacked body according to claim 1, wherein, the binder is rubber binder.

6. The sheet-like stacked body according to claim 1, wherein, the surface resistivity of a surface of the sheet-like stacked body on which surface the conductive resin layer is provided is 300mΩ/sq or lower.

7. The sheet-like stacked body according to claim 1, wherein, the particle diameter of each of the carbon particles is 2 to 50$\mu$m.

8. The sheet-like stacked body according to claim 1, wherein, the thickness of the conductive resin layer is 10 to 100$\mu$m.

9. The sheet-like stacked body according to claim 1, wherein, the thickness of the conductive resin layer is longer than the particle diameter of each of the carbon particles.

10. The sheet-like stacked body according to claim 1, wherein, the graphite sheet base is an expanded graphite sheet.

11. A method of producing a sheet-like stacked body, comprising: an application process of applying, onto a flexible graphite sheet base, paint including carbon particles, resin and a solvent; and a drying process of evaporating the solvent from the paint.

12. A sheet-like composite body comprising:

an expanded graphite sheet base; and

a gas impermeable resin layer which is formed at least a part of an end face of the expanded graphite sheet base.

13. The sheet-like composite body according to claim 12, wherein, the resin layer entirely covers the end face of the expanded graphite sheet base.

14. The sheet-like composite body according to claim 12, wherein, a pressure change amount in a chamber is 32Pa or smaller under conditions that:

an expanded graphite sheet base is 1.5mm in thickness and 2.0Mg/m$^3$ in bulk density;

an end face exposed to the outside is an outer circumferential surface which is $\phi$ 76mm in diameter;

an end face exposed to the inside of the chamber is an inner circumferential surface which is $\phi$32mm in diameter;

the capacity of the chamber is 11,050cm$^3$; and

an initial pressure in the chamber is 190Pa.

15. The sheet-like composite body according to claim 12, wherein, the thickness of the resin layer is 5$\mu$m or longer.

## FIG.1

FIG.2A

THICKNESS
DIRECTION

FIG.2B

FIG.3

## FIG.4A

φ79mm

φ38mm

261

261a

## FIG.4B

φ78mm

φ15 mm

φ30mm

B

B

262

262a

262b

CROSS SECTION
TAKEN ALONG B-B LINE

262

## FIG.4C

φ80mm

265

## FIG.4D

φ110mm

D

D

266

CROSS SECTION
TAKEN ALONG D-D LINE

266

## FIG.4E

φ32mm

φ76mm

201

201a

18

FIG.5A

FIG.5B

FIG.6

GAS PERMEABILITY
(cm²/sec)

GAS PERMEABILITY

PRESSURE INCREASE
(Pa)

APPLICATION AMOUNT ON ONE SURFACE (g/cm²)
AND LAYER THICKNESS(μm)

☐ ΔP  ▬■▬ GAS PERMEABILITY

FIG.7

SURFACE
RESISTIVITY
(mΩ/sq)

350

300

250

200

150

100

50

0

NO APPLICATION
(0 μm)

0.002
(12 μm)

0.006
(35 μm)

0.013
(76 μm)

0.017
(100 μm)

APPLICATION AMOUNT ON ONE SURFACE (g/cm²)
AND LAYER THICKNESS(μm)

■ SURFACE RESISTIVITY

FIG.8

APPLICATION AMOUNT ON ONE SURFACE 0.06g/cm³
(LAYER THICKNESS 35μ m)

CONDUCTIVE
RESIN LAYER

GRAPHITE SHEET

50 μm

FIG.9

UCC−2

MINIMUM THICKNESS OF RESIN LAYER ($\mu$ m)

FIG.10

AQUEOUS PAINT

PRESSURE CHANGE AMOUNT (Pa)

MINIMUM THICKNESS OF RESIN LAYER ($\mu$m)

FIG.11

<Nb. 10>　　　　　　　　<Nb. 12>　　　　　　　　<Nb. 13>

<Nb. 14>　　　　　　　　<Nb. 15>

## INTERNATIONAL SEARCH REPORT

International application No.

PCT/JP2014/069245

A. CLASSIFICATION OF SUBJECT MATTER
*B32B9/00*(2006.01)i, *B05D7/00*(2006.01)i, *B05D7/24*(2006.01)i

According to International Patent Classification (IPC) or to both national classification and IPC

B. FIELDS SEARCHED

Minimum documentation searched (classification system followed by classification symbols)
B32B1/00-43/00, B05D1/00-7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-216788 A (Shin-Kobe Electric Machinery Co., Ltd.), 02 August 2002 (02.08.2002), claims; paragraphs [0009] to [0013]; examples; drawings (Family: none) | 1-15 |
| X | JP 2002-38033 A (Suzuki Sogyo Co., Ltd.), 06 February 2002 (06.02.2002), claims; paragraphs [0022] to [0026]; examples; drawings (Family: none) | 1-15 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 October, 2014 (06.10.14) | 14 October, 2014 (14.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

26

**INTERNATIONAL SEARCH REPORT**

International application No.

PCT/JP2014/069245

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2002-9213 A  (Suzuki Sogyo Co., Ltd.), 11 January 2002 (11.01.2002), claims; paragraphs [0025] to [0027], [0032]; examples; drawings (Family: none) | 1-15 |
| X | JP 2001-358264 A  (Suzuki Sogyo Co., Ltd.), 26 December 2001 (26.12.2001), claims; paragraphs [0029] to [0033], [0038], [0053]; examples; drawings (Family: none) | 1-15 |

Form PCT/ISA/210 (continuation of second sheet) (July 2009)

**REFERENCES CITED IN THE DESCRIPTION**

**Patent documents cited in the description**

• JP 2002093431 A